# EUROPEAN PATENT APPLICATION

(11) **EP 4 401 258 A2**
(43) Date of publication of application: **17.07.2024**
(21) Application number: 24151699.6
(22) Date of filing: 12.01.2024
(51) Int. Cl.: H02J 1/10, H02J 7/00, H02M 3/158

(54) **ENERGY STORAGE SYSTEM, METHOD, AND APPARATUS**

(30) Priority: 13.01.2023 US 202363479843 P
(71) Applicant: Solaredge Technologies Ltd., Herzeliya 4673335 (IL)
(72) Inventor: YOSCOVICH, Ilan, 4673335 Herzeliya (IL); LEVY, Yehuda, 4673335 Herzeliya (IL); BADASH, Roni, 4673335 Herzeliya (IL)
(74) Representative: V.O.

(57) **Abstract**

An apparatus comprising a first and second terminals, a sensor, and energy storage device, a plurality of converter, a controller and an auxiliary power circuit. The plurality of power converters are connected to the energy storage device. Each power converter converters power from the energy storage device to the first and second terminals, or from the first and second terminals to the energy storage device. The controller synchronously controls one or more power converters of the plurality of power converters. The auxiliary power circuit provides power to the controller from one or more of a plurality of auxiliary power sources.

## Description

### FIELD OF THE DISCLOSURE

The disclosure relates generally to power systems. More specifically, the disclosure provides apparatus systems and method for improving power production reliability of an energy storage system.

### BACKGROUND OF THE DISCLOSURE

Known in the art energy storage systems may comprise a plurality of energy storage cells. A number of storage cells may be connected (e.g., in series or in parallel) to form an energy storage module. A number of energy storage modules may be connected (e.g., in series or in parallel) to form an energy storage pack. One or more energy storage packs, may be connected to circuitry (e.g., a control circuits such as a Battery Management System - BMS) to form an energy storage system. In some cases, the energy storage system may comprise a power converter for converting power from the energy storage system to a load, or for converting power from a power source (e.g., photovoltaic panels, a grid) to the energy storage system (e.g., to charge the energy storage cells).

### BRIEF SUMMARY OF THE DISCLOSURE

The following presents a simplified summary of the disclosure in order to provide a basic understanding of some aspects of the disclosure. This summary is not an extensive overview of the disclosure. It is not intended to identify key or critical elements of the disclosure or to delineate the scope of the disclosure. The following summary merely presents some concepts of the disclosure in a simplified form as a prelude to the more detailed description provided below.

A first aspect of the disclosure provides a reliable, robust, and safe power conversion apparatus for an energy storage module (e.g., a battery comprising one or more battery cells), comprising fail-operation and fail-safe features. The fail-operation capabilities may provide for continuation of operation in cases a component or components fails. The fail-safe capabilities may provide for safety of the power conversion apparatus. The power conversion apparatus may comprise a plurality of power converters, configured to convert power to or from an energy storage module. The plurality of power converters may operate synchronously (e.g., in an interleaved mode). In case one of the plurality of power converters becomes inoperative, the remaining power converters may continue to convert power. The power conversion apparatus may comprise a plurality of safety features. For example, each power converter of the plurality of power converters may comprise a fuse, configured to disconnect the corresponding power converter from the energy storage module in case a current through the fuse exceeds a threshold. The power conversion apparatus may comprise a disconnect switch configured to disconnected the power conversion apparatus from other circuits or modules in case of a fault. The power conversion apparatus may comprise a bypass switch configured to bypass the power conversion apparatus in case of a fault.

Another aspect of the disclosure provides for an auxiliary power circuit, configured to provide auxiliary power to the power conversion apparatus from a plurality of sources. The plurality of sources may be a corresponding power storage module, an auxiliary power source via an auxiliary power bus, or a communication bus. Thus, in case of a fault in one of the power sources, the power conversion apparatus may receive auxiliary power from other sources. The auxiliary power circuit may provide power, from the power storage module, to the auxiliary power bus.

### BRIEF DESCRIPTION OF THE DRAWINGS

A more complete understanding of the present disclosure and the advantages thereof may be acquired by referring to the following description in consideration of the accompanying drawings, in which like reference numbers indicate like features, and wherein:
Figure 1 is a block diagram depicting an example of a system for energy storage according to aspects of the disclosure.
Figures 2A-2B are block diagrams depicting example of a power conversion apparatus according to aspects of the disclosure.
Figure 2C is a schematic diagram depicting an example of a plurality of power converters according to aspects of the disclosure.
Figure 2D is a block diagram depicting an example of a configuration of gate drivers according to aspects of the disclosure herein;
Figure 2E is a block diagram depicting an example of two auxiliary power circuits of two power conversion apparatuses according to aspects of the disclosure.
Figure 3 is a flowchart depicting an example of a method according to aspects of the disclosure.
Figure 4 is a block diagram depicting an example power conversion system according to aspects of the disclosure.

### DETAILED DESCRIPTION OF THE DISCLOSURE

In the following description of the various embodiments, reference is made to the accompanying drawings, which form a part hereof, and in which is shown by way of illustration various embodiments in which the disclosure may be practiced. It is to be understood that other embodiments may be utilized and structural and functional modifications may be made without departing from the scope of the present disclosure.

The present disclosure relates to an energy storage module, comprising one or more energy storage cells (e.g., battery cells). Aspects of the disclosure herein may provide for a robust and safe power conversion apparatus comprising fail-operation and fail-safe capabilities. The fail-operation capabilities may provide for continuation of operation in cases a component or components fails. The fail-safe capabilities may provide for safety of the power conversion apparatus. Additionally, the power conversion apparatus may comprise an energy storage module, according to various aspects of the disclosure. The power conversion apparatus may produce power from the energy storage module at a Maximum Power Point (MPP). The power conversion apparatus may comprise a plurality of power converters. The plurality of power converters may provide for redundancy in case of failure of one of the power converters, thus providing a fail-operation capability. For example, each power converter of the plurality of power converters may have corresponding gate drivers controlling the corresponding switches based on a corresponding control signal (e.g., a Pulse Width Modulation - PWM signal). The corresponding control signals of the plurality of power converters may be synchronized such that the control signals are out of phase, thus reducing the ripple at the output of the power conversion apparatus. Each power converter may comprise a corresponding disconnect switch. The disconnect switch may be configured to disconnect the corresponding power converter based on various situations and parameters (e.g., which may be further explained below). The power conversion apparatus according to aspects of disclosure herein may further comprise a bypass switch, configured to bypass the power conversion apparatus based on various situations and parameters (e.g., which may be further explained below). The power conversion apparatus, in some instances, may comprise an auxiliary power circuit, which may provide auxiliary power to the power conversion apparatus from a plurality of sources (e.g., from the energy storage module, from an auxiliary power bus, from a communication bus). The auxiliary power circuit may provide power from the energy storage module to the auxiliary power bus (e.g., which may be used by other power conversion apparatuses).

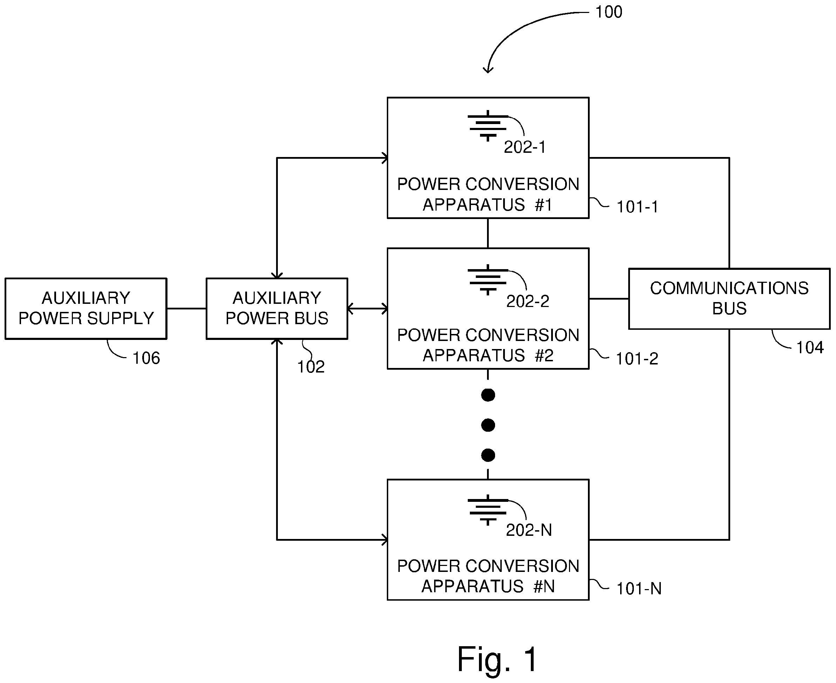

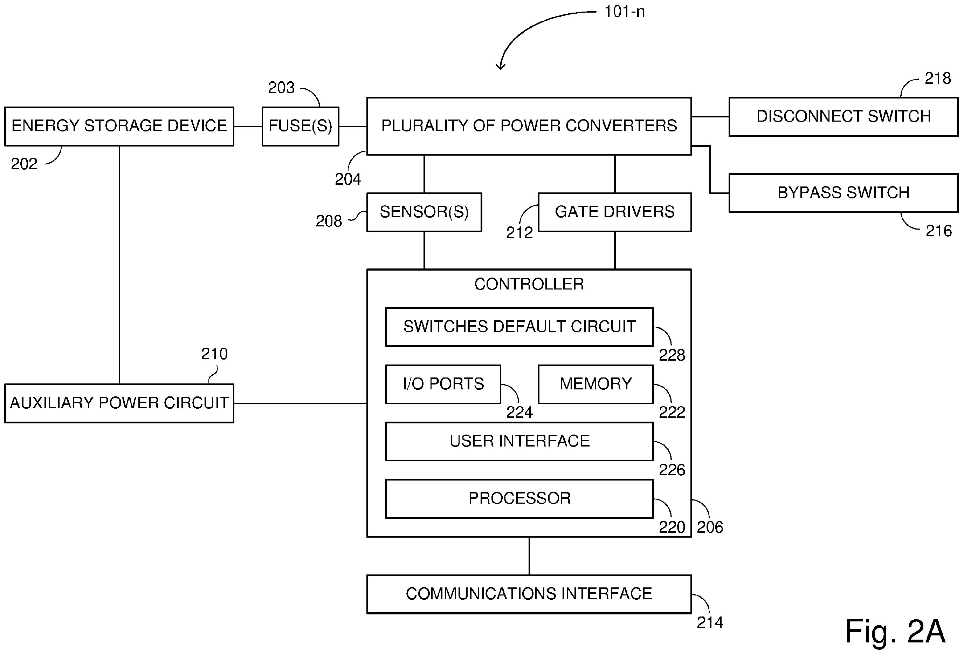

Reference is made to Figure 1, which shows an example of a system 100 for energy storage. As shown in Figure 1, system 100 comprises a plurality of power conversion apparatuses 101-1, 101-2, ..., 101-N, an auxiliary power bus 102, a communications bus 104 and an auxiliary power supply 106. Each power conversion apparatus 101-1, 101-2, ..., 101-N may comprise an energy storage module (e.g., 202-n, described in more detail below). Each power conversion apparatus 101-1, 101-2, ..., 101-N may be coupled to auxiliary power bus 102 and to communications bus 104. Auxiliary power bus 102 may also be connected to auxiliary power source 106. As further elaborated below in conjunction with Figures 2A-2E, power conversion apparatuses 101-n may be configured to provide power from the respective energy storage module (e.g., 202-n) to a load (e.g., an inverter, a motor, a home). According to aspects of the disclosure herein, each power conversion apparatuses 101-1, 101-2, ..., 101-N may be configured to receive power from a power source such a photovoltaic array or a power distribution network (e.g., a grid). Power conversion apparatuses 101-1, 101-2, ..., 101-N may be connected in series or in parallel.

Each power conversion apparatus 101-1, 101-2, ..., 101-N may be configured to receive auxiliary power from auxiliary power source 106 via auxiliary power bus 102. Each power conversion apparatus 101-1, 101-2, ..., 101-N may be configured to provide power to auxiliary power bus 102. Auxiliary power relates herein to power used by various circuits and components (e.g., a controller, sensors, amplifiers, gate derivers and the like) in power conversion apparatuses 101-1, 101-2, ..., 101-N, during the operation of power conversion apparatuses 101-1, 101-2, ..., 101-N. Each power conversion apparatus 101-1, 101-2, ..., 101-N may be configured to communicate with other power conversion apparatuses 101-1, 101-2, ..., 101-N, and with other devices (e.g., battery management system, inverter, and the like). According to aspects of the disclosure herein, power conversion apparatus 101-1, 101-2, ..., 101-N may be configured to harvest auxiliary power from communications bus 104.

Reference is made to Figures 2A-2E, which show examples of different aspects of a power conversion apparatus 101-n (e.g., one of power conversion apparatuses 101-1, 101-2, ..., 101-N), according to aspects of the disclosure herein. As shown in the examples of Figures 2A-2E, power conversion apparatus 101-n comprises an energy storage module 202, a plurality of power converters 204, a controller 206, and sensor(s) 208. Power conversion apparatus 101-n may also comprise fuse(s) 203, an auxiliary power circuit 210, gate drivers 212, and a communication interface 214. Power conversion apparatus 101-n may comprise a bypass switch 216 and a disconnect switch 218.

Each power conversion apparatus 101-n may include a plurality of power converters 204, which may be connected to disconnect switch 218 at connection point 248, and with an anode of energy storage module 202. Disconnect switch 218 may be connected to a first terminal 232-1. Bypass switch 216 may be connected between first terminal 232-1 and a second terminal 232-2. Although bypass switch 216 is depicted as a diode, bypass switch 216 may comprise one or more switches (e.g., transistors) as may further be described below. Second terminal 232-2 may be connected with a cathode 230-2 of energy storage module 202. Controller 206 may be connected to sensor(s) 208, auxiliary power circuit 210, gate drivers 212 and communications interface 214. Sensor(s) 208 and gate drivers 212 may be connected to plurality of power converters 204. Gate drivers 212 may be connected to bypass switch 216 and disconnect switch 218. Communications interface 214 may be connected to a communications bus 104. Auxiliary power circuit 210 may be connected to anode 230-1 and cathode 230-2 of energy storage module 202. Auxiliary power circuit 110 may be connected to an auxiliary power bus 102 and to communications bus 104. Auxiliary power circuit 110 may optionally be connected to gate drivers 112 (not shown in Figure 1A for clarity of the figure). As further elaborated below, according to aspects of the disclosure herein, auxiliary power circuit 110 may provide power to controller 206 and gate drivers 112 from one or more of power source 102, auxiliary power bus 102, or communications bus 104. According to aspects of the disclosure herein, auxiliary power circuit 110 may provide power to auxiliary power bus 102 from power source 106.

According to various embodiments, energy storage module 202 may comprise a one or more energy storage cells (e.g., battery cells), an array of capacitors, a supercapacitor, a flywheel, a fuel cell and/or the like, to name a few non-limiting examples. Communications interface 214 may be any appropriate device such as a receiver, a transmitter, or a transceiver, and may be configured to communicate, based on a communications protocol, signals with one or more other transmitters, receivers or transceivers over a medium. The communication protocol may define one or more characteristics of the signals and/or of communications using the signals, such as the transmission frequency or frequencies, a modulation scheme (e.g., Amplitude shift keying - ASK, Frequency shift keying - FSK, Quadrature Phase Shift Keying - QPSK, Quadrature Amplitude Modulation - QAM), multiple access scheme (e.g., Time Division Multiple Access - TDMA, Frequency Division Multiple Access - FDMA, Code Division Multiple Access - CDMA, Carrier Sense Multiple Access - CSMA, Aloha), encoding/decoding schemes (e.g., Non Return to Zero - NRZ, Manchester coding, Block coding), or any other characteristic. The medium may be a wired or a wireless medium. For example, a wired medium may be a dedicated communications cable. A wired medium may be power lines.

Controller 206 may be partially or fully implemented as one or more computing devices and/or may include one or more processors, such as an Application Specific Integrated Circuit (ASIC) controller, Field Programmable Gate Array (FPGA) controller, a microcontroller, or a multipurpose computer. Controller 206 may comprise one or more processors 220, connected to memory 222 and to Input/Output (I/O) ports 224. Controller 206 may comprise a user interface 226 and a switches default circuit 228. Memory 222 may store computer readable instructions as well as data (e.g., measurements from sensor(s) 208 or parameters). I/O ports 224 may be configured to connect modules (e.g., sensor(s) 208, communication interface 214, or other modules of power conversion apparatus 101-n) to one or more processors 220. The one or more processors 220 may execute the instructions, which may result in the controller 206 performing one or more steps and/or functions as described herein that are attributed to the controller 206. To provide fail-operation capabilities, power conversion apparatus 101-n may comprise more than one controller, controller 206 and a redundant controller (not shown). For example, if one controller fails, the other controller may continue and control the operation of conversion apparatus 101-n. The two processors need not be identical. For example, the redundant controller may not comprise a user interface and have a smaller number of I/O ports. Another example may be that controller 206 comprises two processors. Thus, if one processor fails, the other may continue and control the operation of conversion apparatus 101-n.

Sensor(s) 208 may comprise one or more voltage sensors (e.g., implemented by employing a resistive or capacitive divider, a resistive or capacitive bridge, comparators), one or more current sensors (e.g., implemented by employing a Current Transformer (CT) sensor, a Hall Effect sensor, or a zero flux sensor), and/or one or more frequency sensors. Sensor(s) 208 may comprise one or more temperature sensors. To provide fail-operation capabilities, sensor(s) 208 may comprise a plurality of voltage sensors, a plurality of current sensos and/or a plurality of temperature sensors.

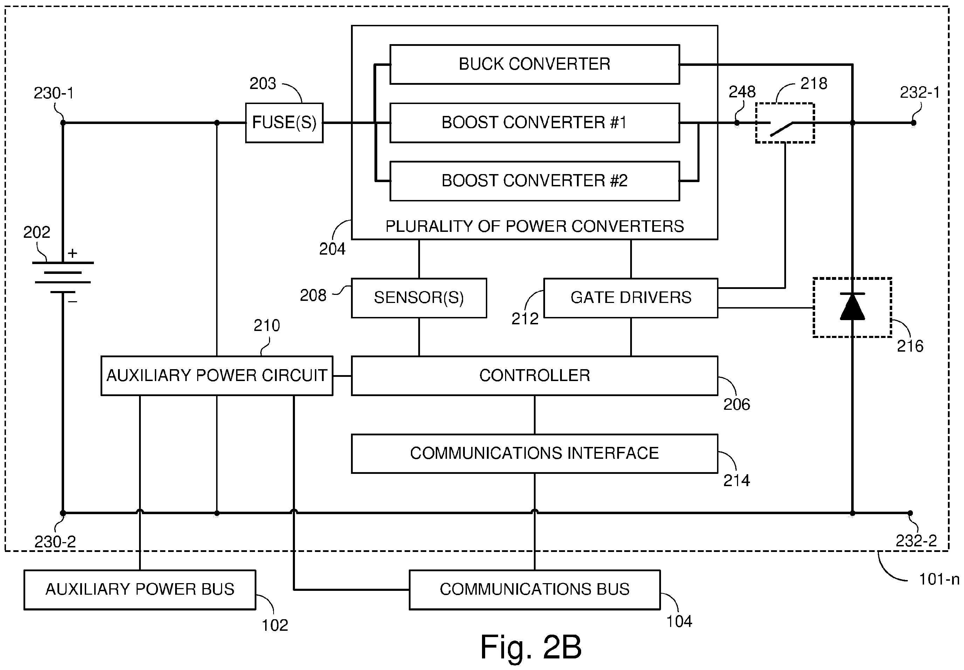

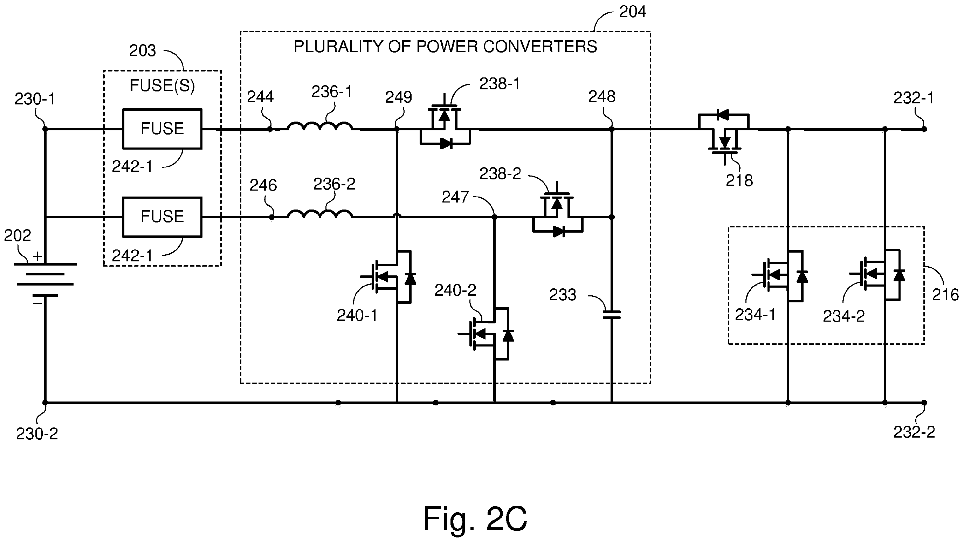

As further elaborated in the example below in conjunction with Figure 2C, each power converter of the plurality of power converters 204 may comprise a switching circuit configured to convert power from energy storage module 202 to the first terminal 232-1 and second terminal 232-2 (e.g., when providing power from energy storage module 202), or from first terminal 232-1 and the second terminal 232-2 to energy storage module 202 (e.g., when charging energy storage module 202). The power converters in the plurality of power converters 204 may be a boost converter, a buck converter, a buck-boost converter, a buck and boost converter, and/or a combination thereof. For example, plurality of power converters 204 may comprise two boost converters and a buck converter. The two boost converters and the buck converter may be connected in parallel (e.g., as may be shown in Figure 2B). The two boost converters may be used during power production from energy storage device 202. The buck converter may be used, for example, for reducing the voltage between terminals 232-1 and 232-2 during a connection power conversion apparatus 101-n with other power conversion apparatuses, or during a connection a serially connected conversion apparatuses 101-n, with other modules.

For the sake of simplicity in description in the disclosure herein, the plurality of power converters 204 may be described as a plurality of boost converters, as shown in Figure 2C. Figure 2C shows an example in which plurality of power converters 204 comprise two boost converters and a capacitor 233. As shown, the first boost converter comprises a first inductor 236-1, a first switch 238-1, a second switch 240-1. Also as shown, the second boost converter comprises a second inductor 236-2, a third switch 238-2, a fourth switch 240-2. First inductor 236-1 and second inductor 236-2 may be implemented using parasitic inductances of system 100 (e.g., parasitic inductances of wires). In the example of Figure 2C, fuse(s) 203 comprise two fuses, first fuse 242-1 for the first boost converter and second fuse 242-2 for the second boost converter. In the example of Figure 2C, first switch 238-1, second switch 240-1, third switch 238-2, and fourth switch 240-2, are shown as Metal Oxide Semiconductor Field Effect Transistors (MOSFETs).

First fuse 242-1 may be connected to anode 230-1 and to a connection point 244. First inductor 236-1 may be connected to connection point 244 and to a connection point 249. The source of first switch 238-1 may be connected to connection point 249 and the drain of first switch 238-1 may be connected to connection point 248. The source of second switch 240-1 may be connected to cathode 230-2 and the drain of second switch 240-1 may be connected to connection point 249. Second fuse 242-2 may be connected to anode 230-1 and to a connection point 247. Second inductor 236-2 may be connected to connection point 246 and to a connection point 247. The source of second switch 238-2 may be connected to connection point 247 and the drain of second switch 238-2 may be connected to connection point 248. The source of second switch 240-2 may be connected to cathode 230-2 and the drain of second switch 240-2 may be connected to connection point 247. Capacitor 233 may be connected to connection point 248 and second terminal 232-2.

In the example shown in Figure 2C, bypass switch 216 comprises two switches 234-1 and 234-2. The sources of bypass switches 234-1 and 234-2 may be connected to second terminal 232-2, and the drains of bypass switches 234-1 and 234-2 may be connected to first terminal 232-1. In the example shown in Figure 2C, sensor(s) 208 may be configured to measure one or more of the voltage between anode 230-1 and cathode 230-2, the voltage between connection point 244 and cathode 230-2, the voltage across capacitor 233, and/or the voltage between first terminal 232-1 and second terminal 232-2. In the example shown in Figure 2C, sensor(s) 208 may be configured to measure one or more of the current through first inductor 236-1, the current through second inductor 236-2, the current through first terminal 232-1 or second terminal 232-2, and/or the current through energy storage module 202. Disconnect switch 218 may also comprise a plurality of switches. For example, disconnect switch 218 may comprise two pairs of serially connected switches, where the two pairs are connected in parallel. According to the disclosure herein, the disconnect function may be implemented with disconnect switch 218 and additional switches in power conversion apparatus 101-n. Thus, a switch (e.g., a transistor) with lower ratings may be used to implement disconnect switch 218 (e.g., relative to a switch in case only disconnect switch 218 is used for the disconnect function). For example, controller 206 may control switch 218, switch 238-1 and switch 238-2 to a non-conducting state to implement the disconnect function.

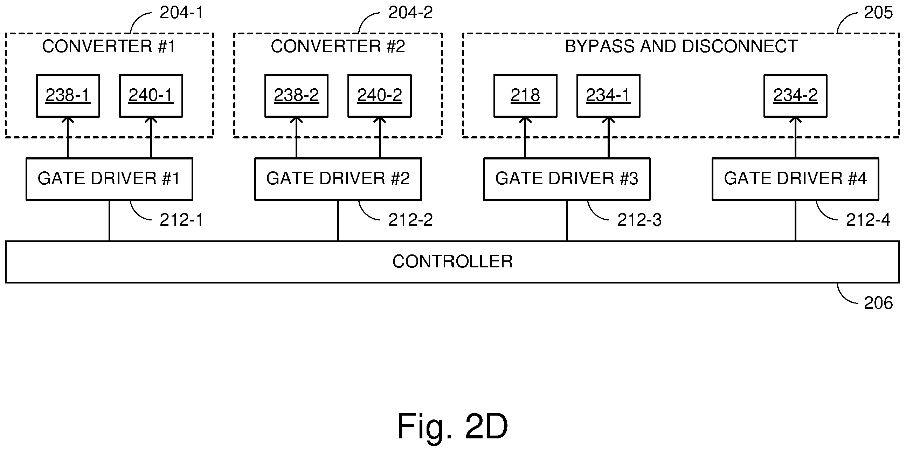

Figure 2D shows a configuration of gate drivers 212, which provide for redundancy of operation of each power conversion apparatus 101-n of the plurality of power conversion apparatuses 101-1, 101-2, ..., 101-N. In the example of Figure 2D, power conversion apparatus 101-n comprises four gate drivers 212-1, 212-2, 212-3, and 212-4. Additionally, in this example, first switch 238-1 and second switch 240-1 are connected to gate driver 212-1. Third switch 238-2 and fourth switch 240-2 are connected to gate driver 212-2. Disconnect switch 218 and bypass switch 234-1 are connected to gate driver 212-3. Thus, controller 206 may control first switch 238-1 and second switch 240-1 of first converter 204-1 via gate driver 212-1, and control third switch 238-2 and fourth switch 240-2 of the second converter 204-2 via gate driver 212-2, independently from the first converter. Thus, in case one of first or second converters 204-1 or 204-2, or the corresponding gate drivers 212-1 or 212-2, become inoperative, the other power converter may continue to convert power from energy storage module 202 to first and second terminals 232-1 and 232-2, or from first and second terminals 232-1 and 232-2 to energy storage module 202.

In some cases (e.g., when the energy in energy storage module 202 is depleted) it may be required to disconnect energy storage module 202 from the other power conversion apparatuses 101-1, 101-2, ..., 101-N. Also, it may be required to bypass the corresponding power conversion apparatus 101-n. To that end, controller 206 may control, via gate driver 212-3, switch 218 to a non-conducting state (e.g., disconnect) and switch 234-1 to a conducting state (e.g., connect). Controller 206 may control, via gate driver 212-4, switch 234-2 to a conducting state as well. In case gate driver 212-3, switch 218 or switch 234-1 are inoperative, the corresponding power conversion apparatus 101-n may still be bypassed via switch 234-2.

According to various aspects of the disclosure, controller 206 may be configured to control bypass switch 216 to a conducting state based on a short circuit in disconnected switch 218 (e.g., sensor(s) 208 measure a low voltage between first terminal 232-1 and second terminal 232-2). In such examples, controller 206 may be configured to control bypass switch 216 to a conducting state in case the energy in energy storage module 202 is depleted (e.g., the amount of energy in energy storage module 202 is below a threshold). Also, controller 206 may be configured to control disconnect switch 218 to a non-conducting state based on a short circuit in bypass switch 216. Controller 206 may be configured to control disconnected switch 218 to a conducting state in case the energy in energy storage module 202 is depleted. As mentioned above, controller 206 includes switches default circuit 228. In case controller 206 becomes inoperative, switches default circuit 228 may be configured to generate signals to gate drivers 212-3 and 212-4 to control switches 218 to a non-conducting state, and switches 234-1 and 234-2 to a conducting state. Switches default circuit 228 may be configured to generate signals to gate drivers 212-1 and 212-2 to control switches 238-1, 240-1, 238-2, and 240-2 to a non-conducting state. According to the disclosure herein, disconnect switch 218 may be a "normally open" switch (e.g., in case no control signal is applied to the gate of disconnect switch 218, then disconnect switch 218 may not conduct). According to the disclosure herein, switches 234-1 and 234-2 may be "normally closed" switches (e.g., in case no control signal is applied to the gates of switches 234-1 and 234-2, then switches 234-1 and 234-2 may conduct).

In some cases controller 206 may control switches 238-1, 240-1, 238-2, and 240-2 to a non-conducting state (e.g., "turn off" the plurality of converters), prior to controlling switch 218 to change a state thereof (e.g., from a non-conducting state to a conducting state or vice versa). Thus, the voltage drop across switch 218 may be the voltage of power storage module 202. In the case where the plurality of power converters 204 are boost converters, a switch with reduced voltage ratings may be employed as switch 218.

As mentioned above, power conversion apparatus 101-n may comprise fuse 242-1 and fuse 242-2. Fuse 242-1 and fuse 242-2 may protect energy storage module 202 from excessive current. For example, in case switch 238-1 shorts, the current through first inductor 236-1 may increase, and thus the current through energy storage module 202 may also increase. In case the current through energy storage module 202 increases above the rating of fuse 242-1, fuse 242-1 may disconnect energy storage module 202 from first inductor 236-1, thus protecting energy storage module 202 from excessive current. In case switch 238-2 shorts, the current through second inductor 236-2 may increase, and thus the current through energy storage module 202 may also increase. In case the current through energy storage module 202 increase above the rating of fuse 242-2, fuse 242-2 may disconnect energy storage module 202 from second inductor 236-2, thus protecting energy storage module 202 from excessive current. In case capacitor 233 shorts, both fuse 242-1 and fuse 242-2 may disconnect energy storage module 202 from the corresponding inductor 236-1 and 236-2, thus protecting energy storage module 202 from excessive current.

Following is a table summarizing various events and corresponding actions according to the disclosure herein:

| **Name** | **Condition(s)** | **Action** | **Identified by** |
|---|---|---|---|
| Energy storage module 202 | 1. Dead (open circuit) | 1. Disconnect switch 218 to non-conduction state. | Sensor(s) 208 may measure the voltage between anode 230-1 and cathode 230-2 |
| | 2. Short Circuit 0V | 2. Control bypass switch to a conducting state. | |
| First Inductor 236-1 | Open circuit fault | Converter 204-2 may continue to operate. | Sensor(s) 208 may measure the current through inductor 236-1 |
| Second Inductor 236-2 | Open circuit fault | Converter 204-1 may continue to operate. | Sensor(s) 208 may measure the current through inductor 236-2 |
| First switch 238-1 | 1. Open circuit fault | 1. Converter 204-2 may continue to operate. | |
| | | 2. Fuse 242-1 may disconnect energy storage module 202 from first inductor 236-1. | |
| | 2. Short circuit fault | | |
| Second switch 240-1 | 1. Open circuit fault | 1. High voltage spike may cause first switch 238-1 to short. | |
| | 2. Short circuit fault | 2. First switch 238-1 may pass excessive current and short. | |
| Third switch 238-2 | 1. Open circuit fault | 1. Converter 204-1 may continue to operate. 2. Fuse 242-2 may | |
| | | | |
| | 2. Short circuit fault | disconnect energy storage module 202 from first inductor 236-1. | |
| Fourth switch 240-1 | 1. Open circuit fault | 1. High voltage spike may cause third switch 238-1 to short. | |
| | 2. Short circuit fault | 2. Third switch 238-1 may pass excessive current and short. | |
| Capacitor 233 | 1. Open circuit fault | 1. High voltage spikes may cause switches 238-1, 240-1, 238-2 and 240-2 to fail. | |
| | 2. Short circuit fault | | |
| | | 2. Fuse 242-1 and Fuse 242-2 may disconnect. | |
| Disconnect switch 218 | 1. Open circuit fault | 1. Power conversion apparatus 101-n may be non-operational. | Sensor(s) 208 may measure the voltage over capacitor 233 and between 1^{st} terminal 232-1 and second terminal 232-2 |
| | | 2. Control bypass switch 216 to a conducting state, and force fuse 242-1 and 242-2 to disconnect, thus isolating the energy storage module. | |
| | 2. Short circuit fault | | |
| Bypass switch 234-1 | 1. Open circuit fault | 1. Bypass switch 234-2 may provide bypass if needed. | |
| | | | |
| | 2. Short circuit fault | 2. Control disconnect switch 218 to a non-conducting state. | |
| Bypass switch 234-2 | 1. Open circuit fault | 1. Bypass switch 234-1 may provide bypass if needed. | |
| | 2. Short circuit fault | 2. Control disconnect switch 218 to a non-conducting state. | |
| Fuse 242-1 | Open circuit fault | Converter 204-1 may continue to operate | |
| Fuse 242-2 | Open circuit fault | Converter 204-2 may continue to operate | |
| Controller 206 | 1. Hardware failure | 1. Switches default circuit to control disconnect switch 218 to a non-conducting state, and bypass switch 216 to a conducting state. | |
| | 2. Software failure | | |
| | | 2. Reset | |
| Auxiliary power circuit 210 | Failure | Switches default circuit to control disconnect switch 218 to a non-conducting state, and bypass switch 216 to a conducting state. | May be identified by lack of communication with controller 206 |
| Gate Driver 212-1 | 1. Failure - open circuit fault | 1. Gate Driver 212-2 may continue to operate. identified by the sensing of the inductors currents. | |
| | 2. Failure - short circuit fault | 2. Limited supply voltage to fated driver 212-1 may enable operation of 212-2 | |
| Gate Driver 212-2 | 1. Failure - open circuit fault | 1. Gate Driver 212-1 may continue to operate. 2. Limited supply voltage to fated driver 212-2 may enable operation of 212-1. | Sensor(s) 208 may measure the current through inductor 236-2 and through inductor 236-2 |
| | 2. Failure - short circuit fault | | |
| Gated Driver 212-3 | 1. Failure - open circuit fault | Disconnect switch 218 may be in a non-conducting state. Bypass switch 216 may be in a conducting state. | |
| | 2. Failure - short circuit fault | | |
| Gated Driver 212-3 | 1. Failure - open circuit fault | Gate driver 212-3 may provide redundancy | |
| | 2. Failure - short circuit fault | | |
| Communications bus 104 | 1. Failure - open circuit fault | 1. Use of a chain connection. | |
| | | 2. May split system bus to strings to limit system failure | |
| | 2. Failure - short circuit fault | | |
| Auxiliary power bus 104 | 1. Failure - open circuit fault | Auxiliary power circuit 210 may provide power from other sources. | |
| | 2. Failure - short circuit fault | | |
| Voltage between terminals 232-1 and 232-2 | Larger than a threshold | 1. Disconnect switch 218 to non-conduction state. | |
| | | 2. Transmit via communications interface 214, to other power conversion apparatuses 101, a signal instructing other power conversion apparatuses 101 to control switch 218 to a non-conducting state (e.g., disconnect). | |

Although the plurality of power converters 204 may provide for redundancy, controller 206 may control the plurality of power converters to operate synchronously so as to reduce the ripple (e.g., the voltage ripple, current ripple) at first and second terminals 232-1 and 232-2. For example, controlling the plurality of power converters 204 synchronously may relate to controlling the plurality of power converter 204 in an interleaved manner, so as to reduce ripple of one or more of voltage and current at terminals 232-1 and 232-2. In interleaved operation, controller 206 control third and fourth switches 238-2 and 240-2 out of phase, relative to first and second switches 238-1 and 240-1. For example, the control signal produced by controller 206 to gate driver 212-2 may be out of phase relative to the control signal produced by controller 206 to gate driver 212-1. For example, in case the control signals of first switches 238-1 240-1, 238-2 and 240-2 are PWM signals, the carrier signal employed for generating the PWM signal for third and fourth switches 238-2 and 240-2 may be out of phase with the carrier signal employed for generating the PWM signal for first and second switches 238-2 and 240-2. The carrier signal may be generated based on pulses generated from a clock signal of controller 206. The phase difference may be based on a count of a difference in clock signals. In case the plurality of power converters 204 includes more than two power converters, than the phase difference between the control signals of the corresponding power converters may be 360/N, where N is the number of power converters. In case one of the power converters of the plurality of power converters 204 becomes inoperative, controller 206 may adjust the phases of the control signals of the remaining power converters, so as to maintain a low ripple at first and second terminals 232-1 and 232-2. For example, in case plurality of power converters 204 includes four power converters, controller 206 may control the phase difference between the corresponding control signals, during synchronous operation, to be 90 degrees. In case one of the power converters of the plurality of power converters 204 becomes inoperative, controller 206 may adjust the phase difference between the control signals of the remaining power converters to be 120 degrees.

According to aspects of the disclosure herein, controller 206 may be configured to control the plurality of power converters 204 to convert power from energy storage module 202 to first and second terminals 232-1 and 232-2 at a maximum power point (MPP). For example controller 206 may use an MPP Tracking (MPPT) algorithm (e.g., perturb and observe, incremental conductance, ripple correlation).

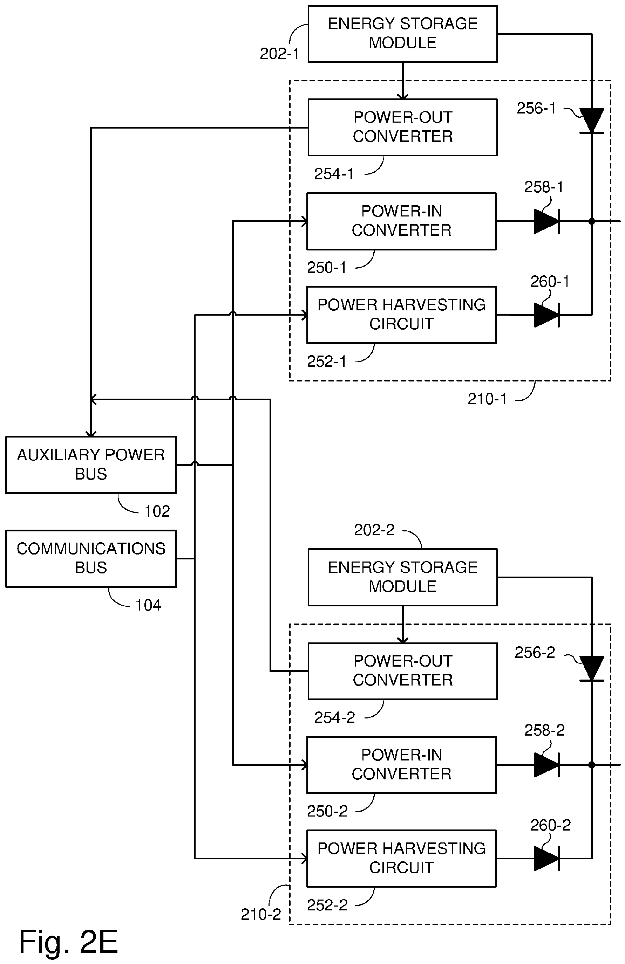

Reference is now made to Figure 2E, which shows two auxiliary power circuits 210-1 and 210-2 of two power conversion apparatus 101-n of power conversion apparatuses 101-1, 101-2, ..., 101-N. Each of auxiliary power circuits 210-n may comprise a power-in converter 250-n, a power harvesting circuit 252-n, and optionally a power-out converter 254-n. Each of auxiliary power circuits 210-n may comprise OR-ing diodes 256-n, 258-n and 260-n. The corresponding energy storage module 102-n may be connected to the power-out converter 254-n and to the anode of OR-ing diode 256-n. Power-out converter 254-n is connected to auxiliary power bus 102. Auxiliary power bus 102 is connected to power-in converter 250-n. Power-in converter 250-n is connected to the anode of OR-ing diode 258-n. Communications bus 104 may be connected to power harvesting circuit 252-2. Power harvesting circuit 252-2 is connected to the anode of OR-ing diode 260-n. The cathodes of OR-ing diodes 256-n, 258-n and 260-n are connected to each other. Power-in converter 250-n may be a buck converter, a boost converter, a buck and boost converter, or a buck-boost converter (e.g., a flyback, SEPIC, or a Cuk converter), configured to provide auxiliary power to power conversion apparatus 101-n. Power-in converter 254-n may be a buck converter, a boost converter, a buck and boost converter, or a buck-boost converter. Power harvesting circuit 252-n may comprise a rectifier, a voltage multiplier, or charge pump. Power harvesting circuit 252-n may also comprise a power converter. Power-in converter 254-n may be a buck converter, a boost converter, a buck and boost converter, or a buck-boost converter (e.g., a flyback, SEPIC, or a Cuk converter), configured to provide auxiliary power to other power conversion apparatuses in system 100. It is noted that power-out converter 254-n may be replaced with a diode, where the anode is connected to the anode of energy storage module 202, and the anode of the diode may be connected to the auxiliary power bus 102.

According to aspects of the disclosure herein, auxiliary power circuit 210-n may provide auxiliary power to the corresponding energy conversion apparatus 101-n, from the energy storage module 202-n, via diode 256-n. Auxiliary power circuit 210-n may additionally or alternatively provide auxiliary power to the corresponding energy conversion apparatus 101-n, from power bus 102, via power-in converter 250-n and diode 258-n. Auxiliary power circuit 210-n may additionally or alternatively provide auxiliary power to the corresponding energy conversion apparatus 101-n from communications bus 104, via power harvesting circuit 252-n and diode 260-n. Auxiliary power circuit 210-n may additionally or alternatively provide auxiliary power to power bus 102, from energy storage module 202-n, via power out converter 254-n. Thus, according to aspects of the disclosure, auxiliary power circuit 210-n may provide auxiliary power to the corresponding power conversion apparatus 101-n from various sources. Providing power from various source may provide redundancy, which may result in energy conversion apparatus 101-n being robust to various failures (e.g., failures in energy storage module 202-n, failure of power-in converter 250-n, failure in auxiliary power supply 106). Following are several examples of failures, which auxiliary power circuit 101-n may overcome:
- In case energy storage module 202-n is empty, auxiliary power circuit 210-n may convert power from auxiliary power bus 102. Power to auxiliary power bus 102 may be provided from auxiliary power supply 106, or from another energy conversion apparatus 101-n.
- In case each energy storage modules 202 of power conversion apparatuses 101-1, 101-2, ..., 101-N is depleted, auxiliary power circuit 210-n may convert power from auxiliary power bus 102, or from communications bus 104, or from both.
- In case auxiliary power source 106 is inoperative, and each energy storage module 202 of power conversion apparatuses 101-1, 101-2, ..., 101-N is depleted, auxiliary power circuit 210-n may convert power from communications bus 104, or from power provided by other energy conversion apparatuses 101-n's on auxiliary power bus 102.
- In case energy storage module 202-n is inoperative (e.g., empty or shorted), auxiliary power circuit 210-n may provide power (e.g., from auxiliary power bus 102 or from other energy storage modules) to controller 206, gate driver 212-3 and/or gate driver 212-4 to controller switches 218, 234-1 and/or 234-2 to bypass or disconnected power conversion apparatus 101-n.

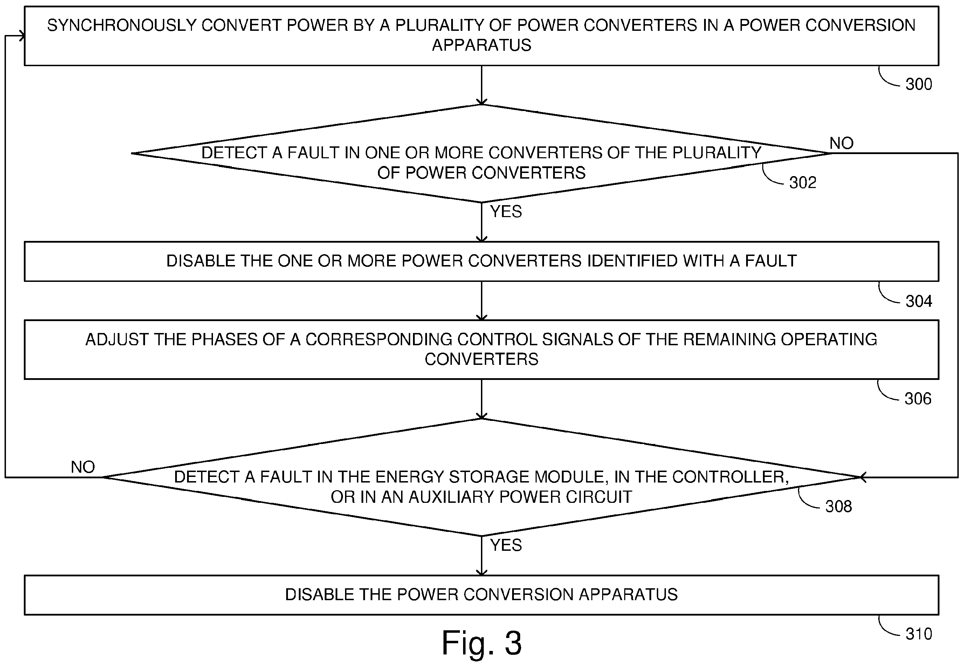

Reference is now made to Figure 3, which shows an example of a method according to aspects of the disclosure herein. In step 300, a plurality of power converters (e.g., plurality of power converters 204) may synchronously convert power from an energy storage module (e.g., energy storage module 202). For example, converting power synchronously by the plurality of power converters may comprise controlling the plurality of power converter in an interleaved manner, so as to reduce ripple of one or more of voltage and current at terminals of the plurality of power converters (e.g., first and second terminals 232-1 and 232-2). In case the plurality of power converters includes N power converters, than the phase difference between the control signals may be 360/N, where N is the number of power converters.

In step 302, a controller (e.g., controller 206) may detect, based on at least one measurement from at least one sensor (e.g., sensor(s) 208), a fault in one or more power converters of the plurality of power converters. A fault (e.g., a short circuit or an open circuit) in a power converter may be a fault in one of the switches (e.g., switches 238-1, 240-1, 238-2, 240-2) of the plurality of power converters, a fault in the inductor (e.g., one or both of inductors 236-1, 236-2), and/or in a gate driver (e.g., gate driver 212-1, or 212-2) corresponding to the power converter. In case the controller detects a fault in one or more power converters, the method may proceed to step 304. In case the controller does not detects a fault in one or more power converters, the method may proceed to step 308.

In step 304, the controller may disable the one or more power converters identified with a fault. Disabling a power converter may comprise the controller disabling the control signal to the power converter, or controlling one or more switches of the power converters to be disabled to a non-conducting state. Disabling a power converter may additionally or alternatively comprise disconnecting a fuse (e.g., fuse 242-1, fuse 242-2) corresponding to the power converter to be disabled.

In step 306, the controller may adjust the phases of a corresponding control signal of the remaining operating converters. For example, in case the plurality of power converters includes N power converters, and one of the power converters becomes inoperative, the controller may adjust the phase difference between the control signals of the remaining power converters to be 360/(N-1).

In step 308, the controller may determine if there is a fault in the energy storage module (e.g., energy storage module 202), in the controller, or in an auxiliary power circuit (e.g., auxiliary power circuit 210). In case the controller detects a fault in the energy storage module, in the controller, or in an auxiliary power circuit, the method may proceed to step 310. In case the controller does not detect a fault in the energy storage module, in the controller, or in an auxiliary power circuit, the method may return to step 300.

In step 310, the controller may disable the power conversion apparatus. For example, the controller may control a disconnect switch (e.g., disconnect switch 218) to a non-conducting state. The controller may control a bypass switch or bypass switches (e.g., bypass switches 234-1 and 234-2) to a conducting state.

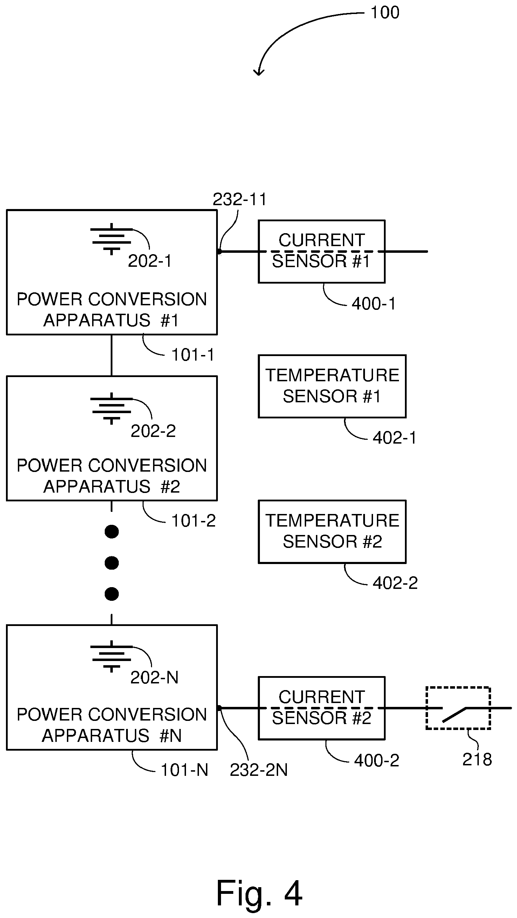

According to the disclosure herein, redundancy for fail-operation capabilities may be achieved at a system level. Reference is made to Figure 4, which shows an example system 100, in which power conversion apparatuses 101-1, 101-2, ..., 101-N are connected in series. In the case shown in Figure 4, some of sensor(s) 208 may be system level sensors, and system 100 may comprise two or more such sensors for fail-operation capabilities. System 100 shown in Figure 4 may comprise two current sensors 400-1 and 400-2. When power conversion apparatuses 101-1, 101-2, ..., 101-N are connected in series the current flowing through power conversion apparatuses 101-1, 101-2, ..., 101-N is the same, 400-1 and 400-2 may provide measurements of the level of the current to all the controllers 206 of power conversion apparatuses 101-1, 101-2, ..., 101-N. Similarly, System 100 shown in Figure 4 may comprise two temperature sensors 402-1 and 402-2 may provide measurements of the level of the temperature of system 100 to all the controllers 206 of power conversion apparatuses 101-1, 101-2, ..., 101-N. Also, in some cases, it may be sufficient to use a single disconnect switch 218 for all power conversion apparatuses 101-1, 101-2, ..., 101-N in system 100. As mentioned above, the disconnect function may be implemented with switch 218 and switches 238-1 and 238-2 in each of power conversion apparatuses 101-1, 101-2, ..., 101-N.

The disclosure herein above relates to a robust and safe power conversion apparatus with various redundant and safety features providing fail-operation and fail-safe capabilities. Such features may be a plurality of power converters, a plurality of auxiliary power sources (e.g., auxiliary power bus 102, energy storage module 202, or communications bus 104), multiple bypass switches 234-1 and 234-2, disconnect switch 218, fuses 242-1 and 242-2 to name a few. It is noted that any combination of the features described herein may be used in a a power conversion apparatus according to the disclosure herein. For example, only a single power converter (e.g., a single buck converter, a single boost converter) may be used with a plurality of sources for auxiliary power, a single bypass switch and a single disconnect switch. For example, a plurality of power converters may be used with two bypass switches, a single disconnect switch and a single auxiliary power supply.

One or more aspects of the disclosure may be embodied in computer-usable data and computer-executable instructions, such as in one or more program modules, executed by one or more computers or other devices. Generally, program modules include routines, programs, objects, components, data structures, etc. that perform particular tasks or implement particular abstract data types when executed by a processor in a computer or other device. The computer executable instructions may be stored on a computer readable medium such as a hard disk, optical disk, removable storage media, solid state memory, RAM, etc. As will be appreciated by one of skill in the art, the functionality of the program modules may be combined or distributed as desired in various embodiments. In addition, the functionality may be embodied in whole or in part in firmware or hardware equivalents such as integrated circuits, field programmable gate arrays (FPGA), and the like. Particular data structures may be used to more effectively implement one or more aspects of the disclosure, and such data structures are contemplated within the scope of computer executable instructions and computer-usable data described herein.

The claims set as filed is repeated herein as clauses in order to preserve all subject matter in the present application.
Clause 1. An apparatus comprising:
   a first terminal;
   a second terminal;
   one or more sensors;
   an energy storage module;
   a plurality of power converters, each connected to the energy storage module, the first terminal, and the second terminal, wherein each power converter of the plurality of power converters comprises a switching circuit, and wherein each power converter of the plurality of power converters is configured to:
      convert power from the energy storage module to the first terminal and the second terminal; or
      convert power from the first terminal and the second terminal to the energy storage module;
   a controller connected to the plurality of converters and configured to synchronously control, based on one or more measurements from the one or more sensors, one or more power converters of the plurality of power converters; and
   an auxiliary power circuit configured to provide power to the controller from one or more of a plurality of auxiliary power sources.
Clause 2. The apparatus of clause 1 further comprising a bypass switch connected to the first terminal and to the second terminal.
Clause 3. The apparatus of clause 2, wherein the bypass switch comprises two or more parallel-connected transistors.
Clause 4. The apparatus of any one of clauses 2-3, wherein the controller is configured to control the bypass switch to a conducting state based on one or more of:
   a short circuit of a disconnect switch;
   a fault in the controller; or
   a determination that an amount of energy stored in the energy storage module is below a threshold.
Clause 5. The apparatus of clause 4, wherein the controller comprises a circuit configured to control the bypass switch to a default conducting state based on the fault to the controller.
Clause 6. The apparatus of any one of clauses 2-5, wherein the one or more sensors are configured to measure a voltage of the energy storage module, and
   wherein the controller is configured to, based on the measurement indicating that the voltage of the energy storage module is below a threshold, control the bypass switch to a conducting state.
Clause 7. The apparatus of any one of clauses 2-6, wherein the one or more sensors are configured to provide a measurement of a current through the energy storage module, and
   wherein the controller is configured to, based on the measurement indicating that the current through the energy storage module is below a threshold, control the bypass switch to a conducting state.
Clause 8. The apparatus of any one of clauses 1-7, further comprising a disconnect switch, connected between one of the first terminal or the second terminal, and the plurality of power converters.
Clause 9. The apparatus of clause 8, wherein the controller is configured to control the disconnect switch to a non-conducting state based on one of:
   a determination that an amount of energy stored in the energy storage module is below a threshold;
   a short circuit in a bypass switch; or
   a fault in the controller.
Clause 10. The apparatus of clause 9, wherein the controller comprises a circuit configured to control the disconnect switch to a default non-conducting state based on the fault to the controller.
Clause 11. The apparatus of any one of clauses 8-10, wherein the one or more sensors are configured to generate a measurement of a voltage of the energy storage module, and
   wherein, based on the measurement indicating that the voltage of the energy storage module is below a threshold, the controller is configured to control the disconnect switch to a non-conducting state.
Clause 12. The apparatus of any one of clauses 8-11, wherein the one or more sensors are configured to generate a measurement of a current through the energy storage module, and
   wherein the controller is configured to, based on the measurement indicating that the current through the energy storage module is below a threshold, control the disconnect switch to a non-conducting stated.
Clause 13. The apparatus of any one of clauses 1-12, further comprises a plurality of fuse connected between the energy storage module and a corresponding switching circuit of a power converter of the plurality of power converters,
   wherein each fuse is configured to disconnect the corresponding power converter from the energy storage module responsive to an amount of current flowing between the corresponding switching circuit and the energy storage module exceeding a threshold.
Clause 14. The apparatus of any one of clauses 1-13, further comprising a plurality of gate drivers,
   wherein switches in each switching circuit are connected to a corresponding gate driver of the plurality of gate drivers.
Clause 15. The apparatus of clause 14, further comprising:
   a disconnect switch connected to the first terminal and the plurality of power converters; and
   a plurality of bypass switches connected to the first terminal and to the second terminal,
   wherein a first gate driver of the plurality of gate drivers is connected to the disconnect switch and a first bypass switch of the plurality of bypass switches, and
   wherein a second gate driver of the plurality of gate drivers is connected to remaining ones of bypass switches.
Clause 16. The apparatus of any one of clauses 1-15, wherein the one or more sensors are configured to measure a voltage between the first terminal and the second terminal.
Clause 17. The apparatus of any one of clauses 1-16, wherein the plurality of the converters comprise a capacitor.
Clause 18. The apparatus of clause 17, wherein the one or more sensors are configured to measure a voltage across the capacitor.
Clause 19. The apparatus of any one of clauses 1-17, wherein each of the plurality of power converters further comprises a corresponding inductor.
Clause 20. The apparatus of clause 19, wherein the one or more sensors are configured to measure an amount of current flowing through each corresponding inductor.
Clause 21. The apparatus of any one of clauses 1-20, wherein the one or more sensor is configured to measure an amount of current flowing through the energy storage module.
Clause 22. The apparatus of any one of clauses 1-21, wherein the auxiliary power circuit is configured to receive power from one or more of the energy power storage, an auxiliary power bus, or a communications bus.
Clause 23. The apparatus of clause 22, wherein the auxiliary power circuit comprises a first power converter configured to receive power from the auxiliary power bus, and provide the received power to the controller via a first diode.
Clause 24. The apparatus of any one of clauses 22-23, wherein the auxiliary power circuit comprises a power harvesting circuit configured to:
   receive a signal from the communications bus;
   transform the signal to electrical power; and
   provide power to the controller via a second diode.
Clause 25. The apparatus of clause 24, wherein the power harvesting circuit comprises one or more of a rectifier or a voltage multiplier circuit.
Clause 26. The apparatus of any one of clauses 22-25, wherein the auxiliary power circuit is configured to provide power from the energy storage module to the controller via a third diode.
Clause 27. The apparatus of any one of clause 22-26, wherein the auxiliary power circuit further comprises a second power converter configured to:
   receive power from the energy storage module; and
   provide power to the power bus.
Clause 28. The apparatus of clause 1, wherein the controller generates a corresponding control signal of each power converter of the plurality of power converters, wherein a phase difference between the control signal is based on the number of power converters in the plurality of power converters.
Clause 29. The apparatus of clause 28, wherein the controller is configured to adjust each phase of the corresponding control signal of the remaining operating converters based on the measurement from the one or more sensors indicating a power converter of the plurality of power converters is inactive.
Clause 30. The apparatus of any one of clauses 1-29, wherein the controller controls the power converters to convert power from the energy storage module to the first terminal and the second terminal based on a Maximum Power Point Tracking (MPPT) algorithm.
Clause 31. A method comprising:
   synchronously converting, by a plurality of power converters, power from an energy storage module;
   detecting, by one or more sensors, a fault in one or more power converters of the plurality of power converters;
   disabling, by a controller, the one or more power converters identified with a fault;
   detecting, by the one or more sensors, a second fault in the energy storage module, the controller, or an auxiliary power circuit; and
   disabling, by the controller, the plurality of power converter based the second fault.
Clause 32. The method of clause 31, wherein disabling the plurality of power converters comprises controlling a disconnect switch to disconnect the plurality of power converters from output terminals based on one or more of:
   a short circuit of a bypass switch;
   a fault in the controller; or
   a determination that an amount of energy stored in the energy storage module is below a threshold.
Clause 33. The method of any one of clauses 31-32, wherein disabling the plurality of power converters comprises controlling a bypass switch to bypass the plurality of power converters from output terminals based on one or more of:
   a short circuit of a disconnect switch;
   a fault in the controller; or
   a determination that an amount of energy stored in the energy storage module is below a threshold.
Clause 34. The method of any one of clause 31-33, wherein disabling the one or more power converters identified with a fault comprises disconnecting, by a fuse, the one or more power converters identified with a fault from the energy storage module, responsive to a current flowing between the switching circuit and the energy storage module exceeding a threshold.
Clause 35. The method of any one of clause 31-34, wherein the synchronously converting power by a plurality of power converters comprises, selecting, by the controller, a phase for a corresponding control signal of each power converter of the plurality of power converters.
Clause 36. The method of any one of clause 31-35 further comprising adjusting each phase of a corresponding control signal of a second one or more power converters, of the plurality of power converters, in which a fault was not detected.
Clause 37. The apparatus of any one of clauses 31-36, wherein synchronously converting power from an energy storage module comprises converting power from the energy storage module based on a maximum power point tracking (MPPT) algorithm.
Clause 38. A system comprising:
   an auxiliary power bus;
   a communications bus; and
   a plurality of power conversion apparatuses, each coupled to the auxiliary power bus and to the communications bus, wherein each power conversion apparatus comprises:
      an energy storage module;
      a plurality of power converters connected to the energy storage module and to a first terminal and a second terminal, wherein each power converter of the plurality of power converters comprises a switching circuit, and wherein each power converter of the plurality of power converters is configured to:
         convert power from the energy storage module to the first terminal and the second terminal; or
         convert power from the first terminal and the second terminal to the energy storage module;
      a controller, connected to each of the plurality of power converters, and configured to synchronously control one or more power converters of the plurality of power converters; and
      an auxiliary power circuit configured to provide power to the controller from one or more of the energy storage module, the auxiliary power bus, or the communications bus.
Clause 39. The system of clause 38, wherein the auxiliary power circuit comprises a first power converter, configured to:
   receive power from the auxiliary power bus; and
   provide the received power to the controller via a first diode.
Clause 40. The system of any one of clause 38-39, wherein the auxiliary power circuit comprises a power harvesting circuit configured to:
   receive a signal from the communications bus;
   transform the signal to electrical power; and
   provide power to the controller via a second diode.
Clause 41. The system of any one of clauses 38-40, wherein the auxiliary power circuit is configured to provide power, from the energy storage module, to the controller, via a third diode.
Clause 42. The system of any one of clauses 38-41, wherein the auxiliary power circuit is further configured to provide power from the energy storage module to the auxiliary power bus.
Clause 43. The system of clause 42, wherein the auxiliary power circuit further comprises a second power converter configured to:
   receive power from the energy storage module; and
   provide power to the power bus.
Clause 44. The system of any one of clauses 38-43, further comprising an auxiliary power source, connected to the power bus, configured to provide auxiliary power to the plurality of power conversion apparatuses.
Clause 45. The apparatus of any one of clauses 1-29, further comprising a second controller configured to provide control capabilities if the controller is inoperative.
Clause 46. The apparatus of any one of clauses 1-29 and 45, wherein the plurality of converters comprise two boost converters.
Clause 47. The apparatus of clause 46 the plurality of converters further comprises a buck converter.
Clause 48. A system comprising:
   one or more conversion apparatuses connected in series, each comprising:
      a second terminal;
      one or more sensors;
      an energy storage module;
      one or more power converters, each connected to the energy storage module, the first terminal, and the second terminal, wherein each power converter of the one or more power converters comprises a switching circuit, and wherein each power converter of the one or more power converters is configured to:
         convert power from the energy storage module to the first terminal and the second terminal; or
         convert power from the first terminal and the second terminal to the energy storage module;
      a controller connected to the one or more converters and configured to control, based on one or more measurements from the one or more sensors, the one or more power converters; and
      an auxiliary power circuit configured to provide power to the controller from one or more of a plurality of auxiliary power sources; and
   a disconnect switch connected to the series connection of power conversion apparatuses.
Clause 49. The system of clause 48, further comprising one or more temperature sensors configured to measure a corresponding temperature of the series connection of power conversion apparatuses.

Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims.

## Claims

1. An apparatus comprising:
a first terminal;
a second terminal;
one or more sensors;
an energy storage module;
a plurality of power converters, each connected to the energy storage module, the first terminal, and the second terminal, wherein each power converter of the plurality of power converters comprises a switching circuit, and wherein each power converter of the plurality of power converters is configured to:
convert power from the energy storage module to the first terminal and the second terminal; or
convert power from the first terminal and the second terminal to the energy storage module;
a controller connected to the plurality of converters and configured to synchronously control, based on one or more measurements from the one or more sensors, one or more power converters of the plurality of power converters; and
an auxiliary power circuit configured to provide power to the controller from one or more of a plurality of auxiliary power sources.

2. The apparatus of claim 1, further comprising a bypass switch connected to the first terminal and to the second terminal,
wherein the bypass switch comprises two or more parallel-connected transistors.

3. The apparatus of claim 2, wherein the controller is configured to control the bypass switch to a conducting state based on one or more of:
a short circuit of a disconnect switch;
a fault in the controller; and
a determination that an amount of energy stored in the energy storage module is below a threshold,
wherein the controller comprises a circuit configured to control the bypass switch to a default conducting state based on the fault to the controller.

4. The apparatus of any one of claims 2-3, wherein the one or more sensors are configured to measure a voltage of the energy storage module, and
wherein the controller is configured to, based on the measurement indicating that the voltage of the energy storage module is below a threshold, control the bypass switch to a conducting state.

5. The apparatus of any one of claims 2-4, wherein the one or more sensors are configured to provide a measurement of a current through the energy storage module, and
wherein the controller is configured to, based on the measurement indicating that the current through the energy storage module is below a threshold, control the bypass switch to a conducting state.

6. The apparatus of any one of claims 1-5, further comprising a disconnect switch, connected between one of the first terminal or the second terminal, and the plurality of power converters,
wherein the controller is configured to control the disconnect switch to a non-conducting state based on one of:
a determination that an amount of energy stored in the energy storage module is below a threshold;
a short circuit in a bypass switch; and
a fault in the controller.

7. The apparatus of claim 6, wherein the one or more sensors are configured to generate a measurement of a voltage of the energy storage module, and
wherein, based on the measurement indicating that the voltage of the energy storage module is below a threshold, the controller is configured to control the disconnect switch to a non-conducting state.

8. The apparatus of claim 7, wherein the one or more sensors are configured to generate a measurement of a current through the energy storage module, and
wherein the controller is configured to, based on the measurement indicating that the current through the energy storage module is below a threshold, control the disconnect switch to a non-conducting stated.

9. The apparatus of claim 8, further comprising:
a disconnect switch connected to the first terminal and the plurality of power converters;
a plurality of bypass switches connected to the first terminal and to the second terminal; and
a plurality of gate drivers,
wherein switches in each switching circuit are connected to a corresponding gate driver of the plurality of gate drivers,
wherein a first gate driver of the plurality of gate drivers is connected to the disconnect switch and a first bypass switch of the plurality of bypass switches, and
wherein a second gate driver of the plurality of gate drivers is connected to remaining ones of bypass switches.

10. The apparatus of any one of claims 1-9, wherein the auxiliary power circuit is configured to receive power from one or more of:
the energy storage module;
one or more other energy storage modules;
an auxiliary power bus; and
a communications bus,
wherein the auxiliary power circuit is further configured to provide the received power to the controller via a first diode.

11. The apparatus of claim 10, wherein the auxiliary power circuit is further configured to:
receive power from the energy storage module; and
provide power to the power bus.

12. The apparatus of any one of claims 1-11, further comprising a plurality of fuses connected between the energy storage module and a corresponding switching circuit of a power converter of the plurality of power converters,
wherein each fuse is configured to disconnect the corresponding power converter from the energy storage module responsive to an amount of current flowing between the corresponding switching circuit and the energy storage module exceeding a threshold.

13. A method comprising:
synchronously converting, by a plurality of power converters, power from an energy storage module;
detecting, by one or more sensors, a fault in one or more power converters of the plurality of power converters;
disabling, by a controller, the one or more power converters identified with a fault;
detecting, by the one or more sensors, a second fault in the energy storage module, the controller, or an auxiliary power circuit; and
disabling, by the controller, the plurality of power converter based the second fault.

14. The method of claim 13, wherein disabling the plurality of power converters comprises controlling a disconnect switch to disconnect the plurality of power converters from terminals based on one or more of:
a short circuit of a bypass switch;
a fault in the controller; and
a determination that an amount of energy stored in the energy storage module is below a threshold.

15. The method of claim 13, wherein disabling the plurality of power converters comprises controlling a bypass switch to bypass the plurality of power converters from terminals based on one or more of:
a short circuit of a disconnect switch;
a fault in the controller; and
a determination that an amount of energy stored in the energy storage module is below a threshold.
